# EUROPEAN PATENT APPLICATION

(11) **EP 4 471 910 A1**
(43) Date of publication of application: **04.12.2024**
(21) Application number: 23737389.9
(22) Date of filing: 05.01.2023
(51) Int. Cl.: H01M 4/66, H01M 4/04, H01M 4/62, H01M 10/0525

(54) **CURRENT COLLECTOR FOR SECONDARY BATTERY AND MANUFACTURING METHOD THEREFOR**

(30) Priority: 07.01.2022 KR 20220002962; 03.01.2023 KR 20230000909
(71) Applicant: Lillem Co., Ltd., Hwaseong-si, Gyeonggi-do, 18581 (KR)
(72) Inventor: PARK, Sung Min, Seoul 07508 (KR); MOON, Sungwook, Icheon-si Gyeonggi-do 17358 (KR); HAN, Kyudong, Suwon-si Gyeonggi-do 16387 (KR)
(74) Representative: Bockhorni & Brüntjen Partnerschaft Patentanwälte mbB
(86) International application number: PCT/KR2023/000188
(87) International publication number: WO 2023/132641

(57) **Abstract**

The present invention relates to a current collector for a secondary battery and a method of preparing the same, and more specifically, comprises a conductive substrate comprising a first metal; and a coating layer coated on a surface of the conductive substrate. The coating layer comprises a second metal, carbon (C), phosphorus (P), and oxygen (O), and the second metal is different from the first metal, and in a result of energy dispersive spectroscopy (EDX) analysis of its surface, total atomic fraction of the second metal, the carbon (C), the phosphorus (P) and the oxygen (O) is 10 at% to 60 at%.

## Description

### [Technical Field]

The present invention relates to a current collector for a secondary battery, a method of preparing the current collector, an electrode for a secondary battery comprising the current collector, and a secondary battery comprising the current collector.

### [Background Art]

Batteries, which generate electrical energy through physical or chemical reactions of substances and supply power to the outside, are used when AC power cannot be supplied to the building or when DC power is required, depending on the living environment surrounded by various electrical and electronic devices.

Among these batteries, primary and secondary batteries, which are chemical batteries utilizing chemical reactions, are commonly used. Primary batteries are consumable batteries that collectively refer to dry batteries. On the other hand, secondary batteries are rechargeable batteries in which oxidation/reduction processes can be repeated at the positive and negative electrodes. The battery is charged by the reduction reaction on the positive electrode through the current, and the battery is discharged by the oxidation reaction on the positive electrode. In secondary batteries, this type of charge-discharge is performed repeatedly.

Recently, lithium secondary batteries have been used in electric vehicles and power storage devices. To ensure the stability of lithium secondary batteries, the performance of lead tabs, pouch packaging materials, and current collectors is being improved. In particular, various studies are being conducted to prevent corrosion, improve cohesion, and improve conductivity with electrode active materials for copper films, nickel-plated copper films, and aluminum films used as collectors.

### [Disclosure]

### [Technical Problem]

Aluminum, aluminum alloy, copper, nickel-plated copper, stainless steel, etc., used as conductive materials for secondary battery current collectors, are processed to a thickness of several micrometers to tens of micrometers through a rolling process. A large amount of rolling oil is used in the rolling process. If rolling oil remains on the surface of the current collector, it has a negative effect on the cohesion between the current collector and the active material layer when forming the active material layer during the manufacture of the electrode. Therefore, when producing a conductive substrate for a secondary battery current collector, the amount of oil remaining on the surface of the substrate is minimized. For this purpose, a degreasing process of annealing and/or washing is performed on the conductive substrate after the rolling process. Since the degreasing process requires a lot of energy and time and generates wastewater, etc., a degreased substrate that has undergone the degreasing process is more expensive than a non-degreased substrate that has not undergone the degreasing process. Therefore, there is a problem of low economic efficiency when manufacturing electrodes and secondary batteries using the degreased substrate.

In order to solve the above problems, the present invention provides a current collector using a non-degreased substrate.

Another problem that the present invention seeks to solve is to provide an electrode for a secondary battery with improved cohesion and conductivity with an active material layer by using the current collector.

Another problem that the present invention seeks to solve is to provide a secondary battery which can maintain cohesion between the current collector and the active material layer during charging and discharging and has improved performance.

### [Technical Solution]

According to a concept of the present invention, a current collector for a secondary battery may comprise a conductive substrate comprising a first metal; and a coating layer coated on a surface of the conductive substrate. The coating layer may comprise a second metal, carbon (C), phosphorus (P), and oxygen (O), and the second metal may be different from the first metal, and in the result of energy dispersive spectroscopy (EDX) analysis of the surface, the atomic fractions of the metal, carbon (C), phosphorus (P), and oxygen (O) may be 10 at% to 60 at%, the atomic fraction of phosphorus (P) may be greater than the atomic fraction of the second metal, the atomic fraction of carbon (C) may be greater than the atomic fraction of the phosphorus (P), and the atomic fraction of oxygen (O) may be greater than the atomic fraction of carbon (C).

According to another concept of the present invention, an electrode for a secondary battery may comprise a current collector for a secondary battery; and an active material layer on the current collector.

According to another concept of the present invention, a secondary battery may comprise a cathode, an anode, a separator between the cathode and the anode, and an electrolyte. At least one of the cathode and the anode may comprise the electrode for a secondary battery.

A method of preparing a current collector for a secondary battery according to another concept of the present invention may comprise adding a metal compound, an inorganic acid, an organic acid, and a first conductive agent into a first solvent to prepare a coating composition; and coating the coating composition on a surface of a conductive substrate to form a coating layer. The conductive substrate is a non-degreased substrate containing a first metal, and the second metal of the metal compound may be different from the first metal.

### [Advantageous Effects]

The current collector for secondary batteries according to the present invention can improve cohesion and conductivity with electrode active materials through a coating layer on its surface. Since the current collector of the present invention can use a non-degreased substrate, it is possible to provide an electrode for a secondary battery with improved economic efficiency.

The secondary battery according to the present invention can reduce the detachment of the active material layer from the current collector during charging and discharging. In addition, the cycle characteristics of the secondary battery can be improved due to the high conductivity of the electrode.

### [Description of Drawings]

FIG. 1 is a schematic diagram illustrating a lithium secondary battery according to examples of the present invention.
FIG. 2 is a schematic cross-sectional diagram illustrating a current collector for a secondary battery according to examples of the present invention.
FIG. 3 is a schematic cross-sectional diagram illustrating an electrode for a secondary battery according to examples of the present invention.
FIG. 4A and FIG. 4B are schematic diagrams illustrating a method for manufacturing a current collector for a secondary battery according to examples of the present invention.
FIG. 5 is a graph showing the results of measuring cycle characteristics for the secondary battery of Example 5 and the secondary battery of Comparative Example 5.
FIG. 6 is a graph showing the results of measuring the discharge capacity of the secondary battery of Example 5 and the secondary battery of Comparative Example 5.
IFG. 7A is a conceptual diagram showing elemental analysis using energy dispersive spectroscopy (EDX) on the surface of a current collector according to an embodiment of the present invention.
FIG. 7B is a conceptual diagram showing elemental analysis using energy dispersive spectroscopy (EDX) on a conductive substrate without a coating layer according to a comparative example of the present invention.
FIG. 7C is a graph showing the cohesion force and conductivity with respect to the change in thickness of the coating layer according to the present invention.

### [Best Mode]

In order to fully understand the configuration and effect of the present invention, preferred embodiments of the present invention will be described with reference to the attached drawings. However, the present invention is not limited to the embodiments disclosed below, but can be implemented in various forms and can be changed in various ways. However, these examples are provided so that the present invention may be fully disclosed through the description thereof, and a person having ordinary skill in the art to which the present invention pertains may fully understand the scope of the invention.

In this specification, when a certain component is mentioned as being on another component, it means that it can be formed directly on the other component or a third component can be interposed between them. In addition, in the drawings, the thickness of the components is exaggerated for effective explanation of the technical contents. Parts indicated by the same reference numerals throughout the specification represent the same components.

The embodiments described herein will be described with reference to cross-sectional and/or plan views, which are ideal exemplary drawings of the present invention. In the drawings, the thicknesses of the layers and regions are exaggerated for the effective explanation of the technical contents. Accordingly, the regions illustrated in the drawings have a schematic nature, and the shapes of the regions illustrated in the drawings are intended to illustrate specific forms of regions of the device and are not intended to limit the scope of the invention. Although the terms first, second, third, etc. have been used in various embodiments of the present invention to describe various components, these components should not be limited by these terms. These terms are only used to distinguish one component from another. The embodiments described and illustrated herein also include complementary embodiments thereof.

The terminology used herein is intended to describe embodiments and is not intended to limit the present invention. In the present invention, the singular includes the plural unless specifically stated otherwise. The terms "comprise" and/or "comprising" as used in the present invention do not exclude the presence or addition of one or more other components.

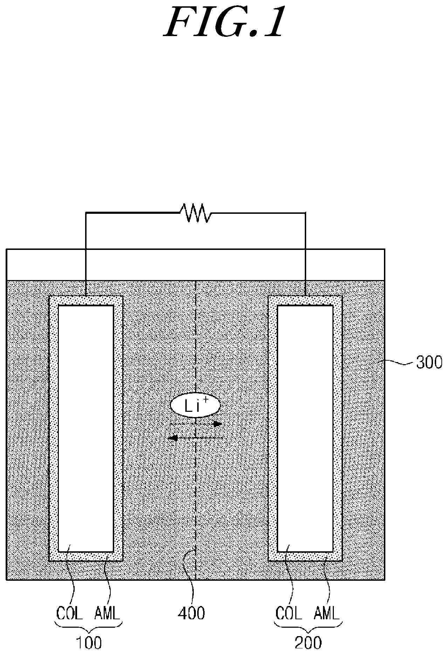

FIG. 1 is a conceptual diagram briefly illustrating a lithium secondary battery according to embodiments of the present invention. Referring to FIG. 1, the lithium secondary battery may include an anode 100, a cathode 200, an electrolyte 300, and a separator 400.

The anode 100 and the cathode 200 may be spaced apart from each other with the separator 400 interposed therebetween. The separator 400 may be placed between the anode 100 and the cathode 200. The anode 100, the cathode 200, and the separator 400 may be in contact with the electrolyte 300. The anode 100, the cathode 200, and the separator 400 may be impregnated into the electrolyte 300.

The electrolyte 300 may be a medium for transferring lithium ions between the anode 100 and the cathode 200. In the electrolyte 300, the lithium ions may pass through the separator 400 and move toward the anode 100 or the cathode 200.

Each of the anode 100 and the cathode 200 may include a current collector (COL) and an active material layer (AML) on the current collector (COL). The active material layer (AML) of the cathode 200 may include a cathode active material which is a source of lithium ions. The cathode active material may include two or more transition metals, as a lithium transition metal oxide. For example, the cathode active material may include a layered compound such as lithium cobalt oxide (LiCoO₂) and lithium nickel oxide (LiNiO₂) substituted with one or more transition metals; lithium manganese oxide substituted with one or more transition metals; lithium nickel-based oxide represented by the chemical formula LiNi_{1-y}M_{y}O₂ (wherein, M includes at least one element selected from the group consisting of Co, Mn, Al, Cu, Fe, Mg, B, Cr, Zn, and Ga, and 0.01≤y≤0.7); a lithium nickel cobalt manganese composite oxide represented by the chemical formula Li_{1+z}Ni_{b}Mn_{c}Co_{1-(b+c+d)}M_{d}O₍₂₋ₑ₎Aₑ (wherein, -0.5≤z≤0.5, 0.1≤b≤0.8, 0.1≤c≤0.8, 0≤d≤0.2, 0≤e≤0.2, b+c+d<1, M is Al, Mg, Cr, Ti, Si, or Y, and A is F, P, or Cl); or an olivine-based lithium metal phosphate represented by the chemical formula Li₁₊ₓM_{1-y}M'_{y}PO_{4-z}X_{z} (wherein, M is a transition metal such as Fe, Mn, Co or Ni, M' is Al, Mg or Ti, X is F, S or N, and -0.5≤x≤+0.5, 0≤y≤0.5, 0≤z≤0.1). In one embodiment, the cathode active material may include primary particles and/or secondary particles in which primary particles are aggregated.

The active material layer (AML) of the anode (100) may include an anode active material. The anode active material may include at least one selected from the group consisting of carbon material, lithium metal or a lithium metal compound, silicon or a silicon compound, and tin or a tin compound. A metal oxide such as TiO₂ or SnO₂ having a potential of less than 2 V may also be used as the anode active material. The carbon material may include low-crystalline carbon and/or high-crystalline carbon.

The separator 400 may include a porous polymer film manufactured from a polyolefin-based polymer such as an ethylene homopolymer, a propylene homopolymer, an ethylene/butene copolymer, an ethylene/hexene copolymer, or an ethylene/methacrylate copolymer. The separator 400 may include a single porous polymer film or a laminate of a plurality of porous polymer films. In another embodiment of the present invention, the separator 400 may include a conventional porous nonwoven fabric, for example, a high-melting point glass fiber or a polyethylene terephthalate fiber.

The electrolyte 300 may include a salt having a structure such as A⁺B⁻. A⁺ may include at least one alkali metal cation selected from the group consisting of Li⁺, Na⁺, and K⁺. B⁻ may include at least one anion selected from the group consisting of F⁻, Cl⁻, Br⁻, I⁻, NO₃⁻, N(CN)₂⁻, BF₄⁻, ClO₄⁻ , AlO₄⁻, AlCl₄⁻, PF₆-, SbF₆-, AsF₆-, BF₂C₂O₄-, BC₄O₈-, (CF₃)₂PF₄-, (CF₃)₃PF₃-, (CF₃)₄PF₂-, (CF₃)₅PF⁻, (CF₃)₆P⁻, CF₃SO₃-⁻, C₄F₉SO₃-, CF₃CF₂SO₃-, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃-, CF₃CO₂-, CH₃CO₂-, SCN⁻ and (CF₃CF₂SO₂)₂N⁻.

In one embodiment of the present invention, the electrolyte 300 may be used by dissolving it in an organic solvent. The organic solvent may include propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof.

The case of the secondary battery according to the embodiments of the present invention may adopt a type commonly used in the relevant technical field, and there is no limitation on the external shape according to the purpose of the battery. For example, the case of the secondary battery may include a cylindrical shape, a square shape, a pouch shape, a coin shape, etc.

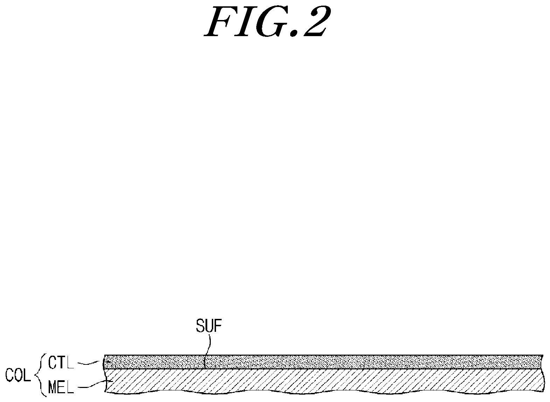

FIG. 2 is a cross-sectional view schematically illustrating a current collector for a secondary battery according to embodiments of the present invention.

Referring to FIG. 2, the current collector (COL) for a secondary battery may include a conductive substrate (MEL) and a coating layer (CTL) on the conductive substrate (MEL). The coating layer (CTL) may be a thin film coated on the surface (SUF) of the conductive substrate (MEL). The coating layer (CTL) may directly cover the surface (SUF) of the conductive substrate (MEL).

The conductive substrate (MEL) may include a first metal. For example, the first metal may be one or an alloy of two or more selected from the group consisting of aluminum, copper, stainless steel, nickel-plated copper, nickel, titanium, palladium, an iron alloy (e.g., an iron-nickel alloy), and an aluminum alloy (e.g., an aluminum-cadmium alloy), In another embodiment, the conductive substrate (MEL) may include calcined carbon. The conductive substrate (MEL) according to the present invention may be used without any particular limitation as long as it is a conductive material.

The conductive substrate (MEL) according to the present invention may use at least one of a degreased substrate that has undergone a rolling process and a degreasing process and a non-degreased substrate that has not undergone a degreasing process without limitation. The non-degreased substrate may refer to a metal substrate (e.g., a non-degreased aluminum substrate) that has undergone only a rolling process without a degreasing process. Rolling oil may remain on the surface of the non-degreased substrate. The conductive substrate (MEL) may include a metal substrate (e.g., a copper substrate or an iron alloy substrate) produced through an electrodeposition process rather than a rolling process.

It may be more preferable to use a non-degreased substrate as the conductive substrate (MEL) in order to improve the economic efficiency of the current collector. For example, the conductive substrate (MEL) may include a non-degreased aluminum substrate. The conductive substrate (MEL) may have a form such as a film, sheet, foil, mesh, net, porous body, foam, or non-woven fabric.

The coating layer (CTL) can improve the cohesion force between the active material layer (AML) and the current collector (COL) described in FIG. 1. As a result, the coating layer (CTL) can improve the cohesion force between the active material layer (AML) and the current collector (COL) described in FIG. 1. By improving the cohesion force between the active material layer (AML) and the current collector (COL), the conductivity of the electrode (100 or 200) can be increased and the internal resistance of the electrode (100 or 200) can be reduced. As a result, the current collector (COL) for a secondary battery according to the present invention can improve the life stability and battery characteristics of the secondary battery.

The coating layer (CTL) can include a second metal, carbon (C), phosphorus (P), and oxygen (O). The second metal can be different from the first metal of the conductive substrate (MEL). The second metal may include at least one selected from the group consisting of chromium (Cr), iron (Fe), cobalt (Co), manganese (Mn), nickel (Ni), zirconium (Zr), and titanium (Ti). For example, the second metal may be chromium (Cr).

The second metal may improve the corrosion resistance of the current collector (COL). Carbon (C) may improve the conductivity of the coating layer (CTL). Phosphorus (P) may form a phosphoric acid film on the surface (SUF) of the conductive substrate (MEL). The thickness of the coating layer (CTL) may be 10 nm to 5 *µ*m. More specifically, the thickness of the coating layer (CTL) may be 100 nm to 3 *µ*m.

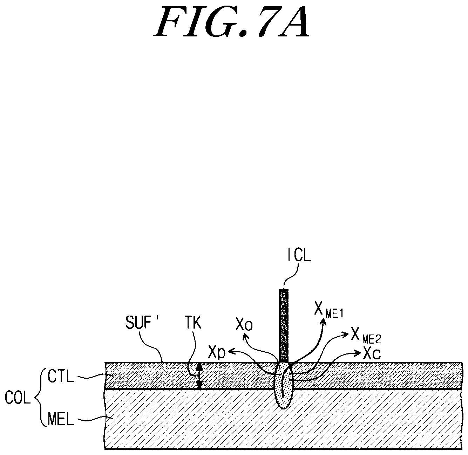

FIG. 7A is a conceptual diagram showing elemental analysis using energy dispersive spectroscopy (EDX) on the surface (SUF') of a current collector (COL) according to an embodiment of the present invention. Referring to FIG. 7A, when elemental analysis is performed using energy dispersive spectroscopy (EDX) on the surface (SUF') of the current collector (COL), the first metal (ME1), the second metal (ME2), and carbon (C), phosphorus (P) and oxygen (O) can be detected.

More specifically, incident light (ICL) may be irradiated onto the surface (SUF') of the current collector (COL). Incident light (ICL) may include an electron beam.

Energy dispersive spectroscopy (EDX), or SEM-EDS, can analyze elements of the current collector (COL) from the surface (SUF') to a depth of about 1 *µ*m to about 3 *µ*m. Atoms that collide with an electron beam can emit their own characteristic X-rays. For example, as shown in FIG. 7A, various X-rays (X_{ME1}, X_{ME2}, X_{C}, X_{O}, X_{P}) may be emitted from the surface (SUF') of the current collector (COL) by the incident light (ICL). By analyzing the emitted X-rays (X_{ME1}, X_{ME2}, X_{C}, X_{O}, X_{P}) using an EDX detector, the type and content of the corresponding element can be confirmed.

The thickness (TK) of the coating layer (CTL) may be 10 nm to 5 *µ*m, more specifically 100 nm to 3 *µ*m. Therefore, when EDX analysis is performed on the surface (SUF') of the current collector (COL) of the present invention, not only elements in the coating layer (CTL) but also elements in the conductive substrate (MEL) can be detected. For example, the X_{ME1} line may be an X-ray generated from a conductive substrate (MEL). That is, it can be confirmed that the conductive substrate (MEL) includes the first metal (ME1).

In addition, the elements that constitute the coating layer (CTL) can be confirmed through the X_{ME2} line, X_{C} line, X_{P} line, and X_{O} line. Namely, it can be confirmed that the coating layer (CTL) contains the second metal (ME2), carbon (C), phosphorus (P), and oxygen (O).

As a result of elemental analysis on the surface of the current collector (COL), the atomic fraction of the first metal (ME1) may be greater than the sum of the atomic fractions of the remaining elements. For example, the first metal (ME1) may have 40 at% to 90 at%, and the remaining elements excluding the first metal (ME1) (the second metal (ME2), carbon (C), phosphorus (P ) and oxygen (O)) may have 10 at% to 60 at%.

The detected fraction of the first metal ME1 may decrease as the thickness (TK) of the coating layer (CTL) increases. For example, when the thickness (TK) of the coating layer (CTL) is greater than 5 *µ*m, the first metal ME1 may hardly be detected.

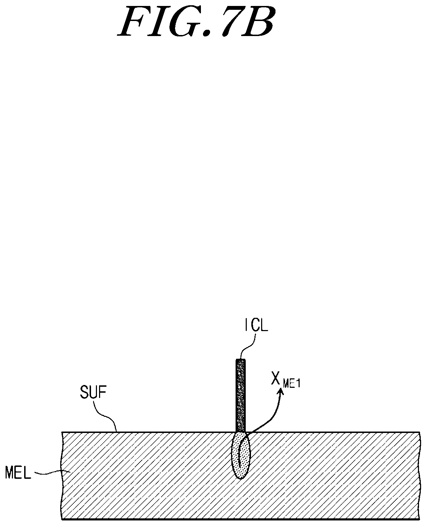

FIG. 7B is a conceptual diagram showing elemental analysis using energy dispersive spectroscopy (EDX) on a conductive substrate (MEL) without a coating layer according to a Comparative Example of the present invention. Referring to FIG. 7B, when elemental analysis is performed using energy dispersive spectroscopy (EDX) on the surface (SUF) of a conductive substrate (MEL), the X_{ME1} line can mainly be detected. This is because X-rays are generated by the first metal (ME1), which constitutes most of the conductive substrate (MEL). In other words, the second metal (ME2), carbon (C), phosphorus (P), and oxygen (O) may not be detected or may be detected in very small amounts.

In the case of a conductive substrate (MEL) in which the coating layer is omitted, as shown in FIG. 7B, the atomic fraction of the first metal (ME1) may be detected to be greater than 90 at%. On the other hand, in the case of the current collector (COL) of the present invention in FIG. 7A, the atomic fraction of the first metal may be detected to be less than 90 at% due to the presence of the coating layer (CTL).

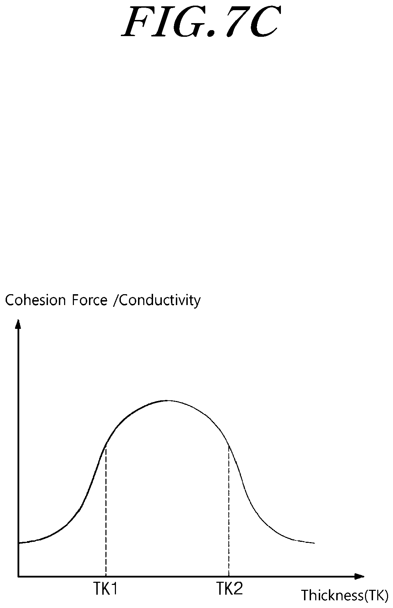

FIG. 7C is a graph showing the cohesion force and conductivity with respect to the change in thickness of the coating layer according to the present invention. Referring to FIG. 7C, as the thickness (TK) of the coating layer (CTL) shown in FIG. 7A increases, the adhesion and conductivity with the active material layer (AML) may improve. After the cohesion force and conductivity with the active material layer (AML) reach their maximum values, the cohesion force and conductivity may decrease as the thickness (TK) of the coating layer (CTL) increases. More specifically, when the thickness (TK) of the coating layer (CTL) is between the first thickness (TK1) and the second thickness (TK2), the electrode for a secondary battery of the present invention may have excellent cohesion force and conductivity. For example, the first thickness (TK1) may be 100 nm and the second thickness (TK2) may be 3 *µ*m.

When the thickness TK of the coating layer CTL is between the first thickness TK1 and the second thickness TK2, the first metal ME1 may be detected as a result of EDX analysis, as previously described with reference to FIG. 7A. Except for the first metal (ME1), the remaining elements (ME2, C, P, and O) may occupy a fraction of 10 at% to 60 at%.

Hereinafter, the atomic fraction between the second metal (ME2), carbon (C), phosphorus (P), and oxygen (O) constituting the coating layer (CTL), excluding the first metal (ME1), will be described. The atomic ratio of the second metal (ME2) based on the total number of atoms of the second metal (ME2), carbon (C), phosphorus (P), and oxygen (O) may be 0.3 at% to 1 at%. The atomic fraction of carbon (C) relative to the total number of atoms may be 5 at% to 25 at%. The atomic fraction of phosphorus (P) relative to the total number of atoms may be 10 at% to 25 at%. Oxygen (O) may account for the remaining atomic fraction.

In one embodiment of the present invention, the atomic fraction of phosphorus (P) may be greater than the atomic fraction of the second metal (ME2). The atomic fraction of carbon (C) may be greater than the atomic fraction of phosphorus (P). The atomic fraction of oxygen (O) may be greater than the atomic fraction of carbon (C). However, the content relationship between the components of the present invention is not limited as above.

The ratio (C/ME2) of the number of atoms of carbon (C) to the number of atoms of the second metal (ME2) may be 10 to 50. The ratio (P/ME2) of the number of atoms of phosphorus (P) to the number of atoms of the second metal (ME2) may be 15 to 35. The ratio (O/ME2) of the number of atoms of oxygen (O) to the number of atoms of the second metal (ME2) may be 85 to 150.

The coating layer (CTL) contains each of the second metal (ME2), carbon (C), phosphorus (P), and oxygen (O) in the ratios described above, thereby forming a cohesion force between the current collector (COL) and the active material layer (AML), which will be described later. can be improved. In addition, even if a non-degreased substrate with residual rolling oil is used as a conductive substrate (MEL), the coating layer (CTL) can improve adhesion and conductivity between the current collector (COL) and the active material layer (AML).

As one embodiment of the present invention, the above-described current collector (COL) can be used as an electrode of a lithium secondary battery. However, the present invention is not limited to this, and the above-described current collector (COL) can be used as an electrode for various secondary batteries such as magnesium secondary batteries or sodium secondary batteries.

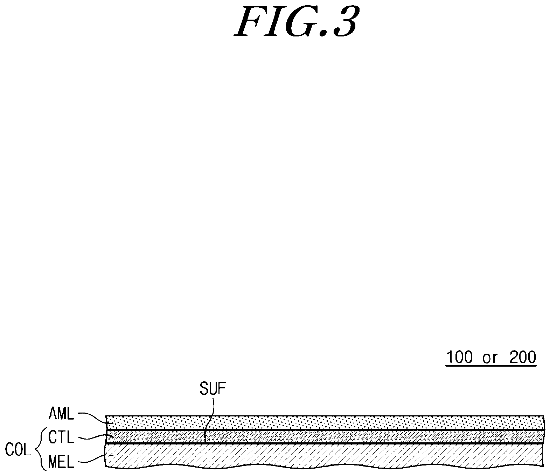

FIG. 3 is a cross-sectional view schematically illustrating a secondary battery electrode according to embodiments of the present invention.

Referring to FIG. 3, the secondary battery electrode may be the anode 100 or the cathode 200 of FIG. 1. The secondary battery electrode may include a current collector (COL) and an active material layer (AML) on the current collector (COL). The current collector (COL) may be the same as described above with reference to FIG. 2.

The active material layer (AML) may include a binder, a second conductive agent, and an electrode active material. The electrode active material may be the anode active material described above when the secondary battery electrode of FIG. 3 is the anode 100. The electrode active material may be the cathode active material described above when the secondary battery electrode of FIG. 3 is the cathode 200. The electrode active material may be included in an amount of 80 wt% to 99 wt%, more specifically, 85 wt% to 98 wt%, based on the total weight of the active material layer (AML).

The second conductive agent may impart conductivity to the active material layer (AML). The second conductive agent may include at least one of a carbon-based material (e.g., graphite, carbon black, acetylene black, Ketjen black, channel black, furnace black, lamp black, summer black, or carbon fiber), a metal powder, a metal fiber, a conductive whisker, a conductive metal oxide, a conductive polymer, and a combination thereof. The second conductive agent may be included in an amount of 1 wt% to 30 wt% based on the total weight of the active material layer (AML).

The binder may improve cohesion between the electrode active material and the current collector (COL). For example, the binder may include at least one of polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene polymer (EPDM), sulfonated-EPDM, styrene butadiene rubber (SBR), fluoroelastomer, and combinations thereof. The binder may be included in an amount of 1 wt% to 30 wt% with respect to the total weight of the active material layer (AML).

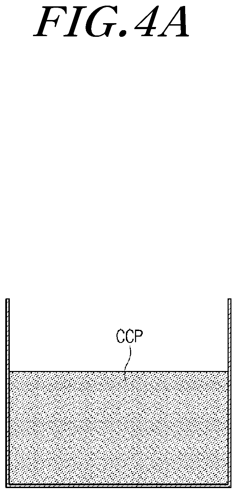

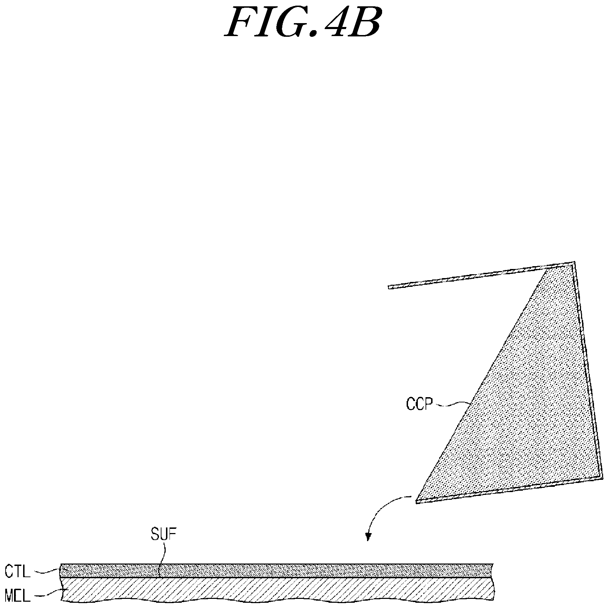

FIG. 4A and FIG. 4B are conceptual diagrams for schematically explaining a method for manufacturing a current collector for a secondary battery according to embodiments of the present invention.

Referring to FIG. 4A, a coating composition (CCP) may be prepared. The coating composition (CCP) may include a metal compound, an inorganic acid, an organic acid, and a first conductive agent.

The metal compound may comprise at least one selected from the group consisting of: chromium potassium alum (KCr(SO₄)₂·12H₂O), chromium chloride (CrCl₃), chromium fluoride (CrFs), chromium hydroxide (Cr(OH)₃), chromium nitrate (Cr(NO₃)₃), chromium phosphate (CrPO₄), iron chromate (FeCr₂O₄) and hydrates thereof; cobalt chloride (CoCl₂), cobalt acetate (Co(CH₃COO)₂·4H₂O), cobalt sulfate (CoSO₄), zinc sulfate (ZnSO₄), manganese sulfate (MnSO₄), nickel sulfate (NiSO₄) and hydrates thereof; zirconium phosphate (Zr(HPO₄)₂), zirconium sulfate (Zr(SO₄)₂), zirconium nitrate (ZrO(NO₃)₂), zirconium hydroxide (Zr(OH)₄); zirconium fluoride (H₂ZrF₆) and its soluble salts (Na₂ZrF₆, K₂ZrF₆, Zr(NH₄)₂F₆); and titanium dioxide (TiO₂).

The inorganic acid may include at least one selected from the group consisting of nitric acid (HNO₃), sulfuric acid (H₂SO₄), phosphoric acid (H₃PO₄), boric acid (H₃BO₃), carbonic acid (H₂CO₃), and hydrogen halides (HI, HBr, HCl, and HF).

The organic acid may include a compound represented by R(COOH)ₙ. The R may be an organic group, a hydroxyl group, or hydrogen bonded to carbon by a single bond or a double bond. The organic group may include an aliphatic group having 1 to 10 carbon atoms or an aromatic group having 1 to 10 carbon atoms. The n represents the number of carboxyl groups and may be an integer greater than or equal to 1. More specifically, the n may be an integer between 1 and 10.

For example, the organic acid may include at least one selected from the group consisting of formic acid, acrylic acid, citric acid, lactic acid, oxalic acid, malonic acid, malic acid, succinic acid, benzoic acid, salicylic acid, acetic acid, propionic acid, butanoic acid, palmitic acid, and oleic acid.

The first conductive agent may include at least one selected from the group consisting of natural graphite, artificial graphite, carbon black, acetylene black, Ketjen black, channel black, furnace black, lamp black, summer black, graphene, and carbon fiber.

Preparing the coating composition (CCP) may include mixing the metal compound, the inorganic acid, the organic acid, and the first conductive agent in a first solvent. The metal compound may be added in an amount of 0.5 to 10 parts by weight, more specifically, 1 to 5 parts by weight, based on 100 parts by weight of the coating composition (CCP). The inorganic acid may be added in an amount of 0.05 to 10 parts by weight, more specifically 0.1 to 5 parts by weight, based on 100 parts by weight of the coating composition (CCP). The organic acid may be added in an amount of 1 to 20 parts by weight, more specifically 2 to 10 parts by weight, based on 100 parts by weight of the coating composition (CCP). The first conductive agent may be added in an amount of 0.01 to 5 parts by weight, more specifically 0.05 to 3 parts by weight, based on 100 parts by weight of the coating composition (CCP).

Referring to FIG. 4B, a coating layer (CTL) may be formed by coating the coating composition (CCP) on a conductive substrate (MEL). The conductive substrate (MEL) may include at least one of the degreased substrate and the non-degreased substrate described above. More specifically, a non-degreased substrate may be used as the conductive substrate (MEL) to improve cost efficiency.

The coating composition (CCP) can be coated on the conductive substrate (MEL) by using spin coating, bar coating, gravure coating, roll coating, blade coating, slide die coating or dipping coating. The coating layer (CTL) can be formed to a thickness of 10 nm to 5 *µ*m.

A drying process can be performed on the coating layer (CTL). The drying process can use an oven or hot air, and is not particularly limited. The drying process can be performed at a temperature of 80°C to 300°C, more specifically 100°C to 200°C, for 5 seconds to 1 hour, more specifically 5 seconds to 30 minutes. The conductive substrate (MEL) and the dried coating layer (CTL) can form a current collector (COL) of FIG. 2.

Hereinafter, a method for manufacturing a secondary battery electrode using a previously manufactured current collector (COL) will be described. An active material layer (AML) can be formed on a coating layer (CTL). Specifically, an electrode active material, a binder, and a second conductive agent can be dissolved or dispersed in a second solvent to manufacture a mixture. After applying the mixture on a current collector (COL), drying and rolling can be performed to manufacture a secondary battery electrode.

The second solvent can be a solvent generally used in the relevant technical field, and can include, for example, at least one of dimethyl sulfoxide (DMSO), isopropyl alcohol, N-methylpyrrolidone (NMP), acetone, water, and a combination thereof. The second solvent can be removed through the drying process.

In another embodiment, the mixture can be cast on a separate support to manufacture a film. The secondary battery electrode can be manufactured by laminating the film on a current collector (COL).

The electrode for a secondary battery according to the present invention can use a current collector formed by coating a coating composition (CCP) including a metal compound, an inorganic acid, an organic acid, and a first conductive agent on a conductive substrate (MEL). That is, the electrode for a secondary battery of the present invention can form an active material layer (AML) on a coating layer (CTL) rather than directly forming an active material layer on a conductive substrate such as aluminum. As a result, the interfacial cohesion between the current collector (COL) and the electrode active material can be improved. In addition, the detachment of the active material layer (AML) from the current collector (COL) can be prevented during charging and discharging of the secondary battery, and the performance of the secondary battery can be further improved due to the high conductivity of the electrode.

### Example 1: Preparation of Surface-Coated Current Collector

### <Step 1: Preparation of Coating Composition>

Chromium (III) nitrate nonahydrate (Cr(NO₃)₃·9H₂O) of 1.5 parts by weight, 0.5 parts by weight of phosphoric acid (OCI company, 85 wt%), 4.9 parts by weight of citric acid, and 0.1 parts by weight of acetylene black (Lion copration, EC 300J) were added to a solvent (distilled water) to prepare a 100 parts by weight coating composition.

### <Step 2: Preparation of Current Collector>

The coating composition prepared in the above step 1 was coated on a conductive substrate, a non-stick aluminum foil (thickness 12 *µ*m), using a bar coating method, and then dried at 180°C for 10 seconds. The thickness of the coating layer after drying was approximately 0.3 *µ*m.

### Example 2: Preparation of Surface-Coated Current Collector

A current collector was manufactured in the same manner as in Example 1, except that 0.25 parts by weight of acetylene black (Lion corporation, EC 300J) was added during the manufacture of the current collector.

### Comparative Example 1

A current collector made only of non-degreased aluminum foil without the coating layer of Example 1 was prepared.

### Comparative Example 2

A current collector made only of degreased aluminum foil without the coating layer of Example 1 was prepared.

### Example 3: Preparation of Cathode for Secondary Battery

LiNi_{0.6}Mn_{0.2}Co_{0.2}O₂ of 92 parts by weight as a cathode active material, 4 parts by weight of acetylene black as a conductive material, and 4 parts by weight of polyvinylidene fluoride as a binder were mixed. The mixture was dispersed in N-methylpyrrolidone (NMP) to prepare a cathode active material slurry. The cathode active material slurry was applied on the coating layer of the current collector prepared in Example 1, dried, and then a roll press process was performed to prepare a cathode.

### Example 4: Preparation of Cathode for Secondary Battery

A cathode was prepared in the same manner as in Example 3, except that the current collector prepared in Example 2 was used.

### Comparative Example 3

A cathode was prepared in the same manner as in Example 2, except that the current collector of Comparative Example 1 was used.

### Comparative Example 4

A cathode was prepared in the same manner as in Example 2, except that the current collector of Comparative Example 2 was used.

### Example 5: Preparation of Lithium Secondary Battery

### <Preparation of Anode>

Carbon powder of 96.3 parts by weight as an anode active material, 1.0 parts by weight of acetylene black as a conductive material, and 1.5 parts by weight and 1.2 parts by weight of SBR and carboxymethyl cellulose (CMC) as a binder were mixed. The mixture was added to an NMP solvent to prepare an anode active material slurry. The anode active material slurry was applied to a copper (Cu) thin film as a current collector with a thickness of 10 *µ*m, dried, and then roll pressed to manufacture a anode.

### <Preparation of Non-aqueous Electrolyte>

Ethylene carbonate (EC), dimethyl carbonate (DMC), and diethyl carbonate (DEC) were mixed in a volume ratio of 1:1:1 to manufacture a solvent. LiPF₆ was added to the solvent to prepare a 1M LiPF₆ non-aqueous electrolyte.

### <Preparation of Lithium Secondary Battery>

After interposing a mixed separator of polyethylene and polypropylene between the cathode of Example 2 and the anode, a pouch-type battery was manufactured using a conventional method. The non-aqueous electrolyte was injected into the pouch to prepare a lithium secondary battery.

### Comparative Example 5

A lithium secondary battery was prepared using the same method as Example 3, except that the cathode of Comparative Example 4 was used.

### Experimental Example

### <Component Analysis of Surface of Collector>

As previously explained with reference to FIG. 7A, each element was analyzed using an energy dispersive spectrometer (EDX) on the collector of Example 1 and the collector of Example 2. The results are shown in Table 1 below.

**[Table 1]**

| Element | Example 1 | | Example 2 | |
|---|---|---|---|---|
| | Weight% | Atomic% | Weight% | Atomic% |
| C | 1.96 | 4.06 | 5.32 | 10.04 |
| O | 9.85 | 15.31 | 19.77 | 28.03 |
| Al | 83.22 | 76.75 | 66.74 | 56.01 |
| P | 4.62 | 3.71 | 7.66 | 5.61 |
| Cr | 0.35 | 0.17 | 0.51 | 0.22 |

Referring to Table 1, it was confirmed that the sum of the atomic fractions of chromium (Cr), phosphorus (P), carbon (C), and oxygen (O) in the collectors of Example 1 and Example 2 was 10 at% or more.

### <Peel test>

The cathodes of Example 3, Example 4, Comparative Example 3, and Comparative Example 4 were punched out to a size of 25 x 100 mm, and then tape was attached to the punched cathode coating surface to manufacture a specimen. The force applied when the manufactured specimen was peeled off at a 180° angle was measured using a UTM cohesion force measurement device. The results are shown in Table 2 below.

### <Measurement of Conductivity of Cathode>

The conductivity of the cathodes of Example 3, Example 4, Comparative Example 3, and Comparative Example 4 was measured. The conductivity of the cathodes was measured using a milliohmmeter by punching the cathodes out to a size of 50 x 50 mm. The results of the above experiments are shown in Table 2 below.

**[Table 2]**

| Experimental Examples | Example 3 | Example 4 | Comparative Example 3 | Comparative Example 4 |
|---|---|---|---|---|
| Cohesion Strength (N/25mm) | 4.7 | 5.3 | 2.8 | 4.1 |
| Conductivity (mS/cm) | 24.0 | 29.7 | 9.8 | 17.5 |

Referring to Table 2, it can be confirmed that the electrodes of Example 3 and Example 4 have excellent cohesion strength and conductivity between the active material layer and the current collector. In particular, it can be confirmed that the electrode of Example 3 has higher cohesion strength and conductivity than Comparative Example 4, which was manufactured with an expensive degreased substrate. In other words, the electrodes for secondary batteries according to the examples of the present invention can exhibit excellent cohesion strength and conductivity even at a low production cost.

### <Cycle characteristics of secondary batteries>

In order to determine the life characteristics of the lithium secondary batteries of Example 5 and Comparative Example 5, an electrochemical evaluation experiment was performed as follows.

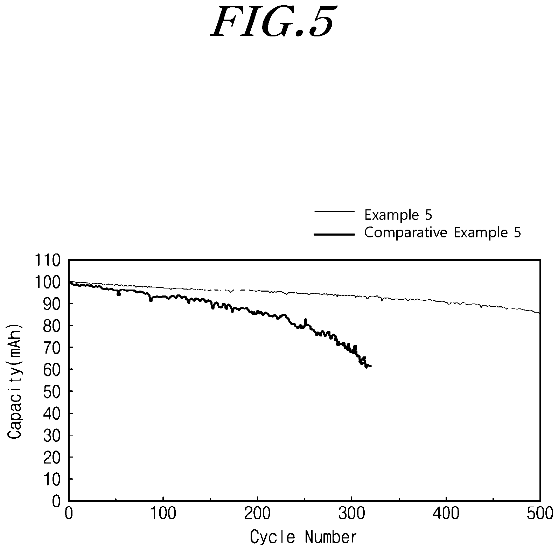

The lithium secondary batteries of Example 5 and Comparative Example 5 were charged at a constant current of 4.2 V at a current density of 1.0 C at 45°C, and then charged at a constant voltage to a current density corresponding to 0.05 C. The constant current discharge was performed to 2.5 V at a current density corresponding to 1.0 C. This cycle was repeated 320 times. The cycle characteristics were measured as a percentage by comparing the capacity after 320 cycles with the initial capacity. The results are shown in FIG. 5.

### <Discharge test of secondary battery>

For the lithium secondary battery of Example 5 and the lithium secondary battery of Comparative Example 5, respectively:
One process of charging at 0.1 C to 4.2 V at room temperature (25°C) and discharging at 0.1 C, and then charging at 0.5 C to 4.2 V and discharging at 0.2 C (0.2 C discharge data),
After charging at 0.5 C to 4.2 V and stabilizing at 0.2 C discharge, charging at 0.5 C to 4.2 V and discharging at 0.5 C (0.5 C discharge data),
After charging at 0.5 C to 4.2 V and stabilizing at 0.2 C discharge, charging at 0.5 C to 4.2 V and discharging at 1.0 C (1.0 C discharge data),
After charging at 0.5 C to 4.2 V and stabilizing at 0.2 C discharge, charging at 0.5 C to 4.2 V and discharging at 2.0 C (2.0 C discharge Data)

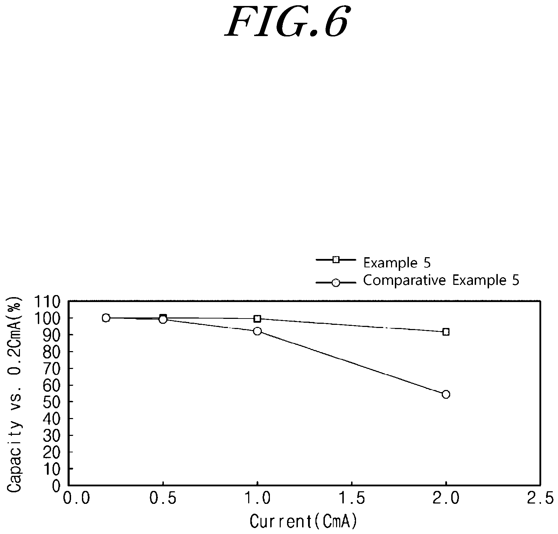

The discharge capacity of the lithium secondary battery was measured through the above processes. The 0.2 C discharge capacity was set as 100% of the reference capacity, and each discharge capacity was calculated as a percentage to evaluate the discharge characteristics. The results are shown in FIG. 6.

The cycle characteristics of the secondary battery and the experimental results of the discharge test are summarized in Table 3 below.

**[Table 3]**

| Experimental Examples | Example 5 | Comparative Example 5 |
|---|---|---|
| Cycle Characteristics (%, at 320cycles) | 92.2 | 61.6 |
| Discharge Characteristics | Good | Average |

Referring to Table 3, it can be confirmed that the secondary battery of Example 5 exhibits superior cycle characteristics and discharge characteristics compared to the secondary battery of Comparative Example 5.

### [Drawings]

[FIG. 5]
   Example 5
   Comparative Example 5
[FIG. 6]
   Example 5
   Comparative Example 5
[FIG. 7c]
   Cohesion Force
   Conductivity
   Thickness

## Claims

1. A current collector for a secondary battery comprising:
a conductive substrate comprising a first metal; and
a coating layer coated on a surface of the conductive substrate,
wherein the coating layer comprises a second metal, carbon (C), phosphorus (P), and oxygen (O), and the second metal is different from the first metal, and in a result of energy dispersive spectroscopy (EDX) analysis of its surface, total atomic fraction of the second metal, the carbon (C), the phosphorus (P) and the oxygen (O) is 10 at% to 60 at%.

2. The current collector for a secondary battery of claim 1, wherein atomic fraction of the second metal relative to total number of atoms of the second metal, carbon (C), phosphorus (P), and oxygen (O) is 0.3 at% to 1 at%;
atomic fraction of the phosphorus (P) relative to the total number of atoms is 10 at% to 25 at%; and
atomic fraction of the carbon (C) relative to the total number of atoms is 5 at% to 25 at%.

3. The current collector for a secondary battery of claim 1, wherein ratio of number of the carbon (C) atoms to number of atoms of the second metal is 10 to 50;
ratio of number of phosphorus (P) atoms to number of atoms of the second metal is 15 to 35; and
ratio of number of oxygen (O) atoms to number of atoms of the second metal is 85 to 150.

4. The current collector for a secondary battery of claim 1, wherein atomic fraction of phosphorus (P) is greater than atomic fraction of the second metal;
atomic fraction of carbon (C) is greater than atomic fraction of the phosphorus (P); and
atomic fraction of oxygen (O) is greater than atomic fraction of the carbon (C).

5. The current collector for a secondary battery of claim 1, wherein the first metal is one or an alloy of at least two selected from the group consisting of aluminum, copper, stainless steel, nickel-plated copper, nickel, titanium, palladium, iron alloys and aluminum alloys.

6. The current collector for a secondary battery of claim 1, wherein the second metal is at least one selected from the group consisting of chromium (Cr), iron (Fe), cobalt (Co), manganese (Mn), nickel (Ni), zirconium (Zr) and titanium (Ti).

7. The current collector for a secondary battery of claim 1, wherein the conductive substrate has a form of film, sheet, foil, mesh, net, porous body, foam, or nonwoven fabric.

8. The current collector for a secondary battery of claim 1, wherein the coating layer has a thickness of 10 nm to 5 *µ*m.

9. An electrode for a secondary battery comprising:
the secondary battery current collector of claim 1; and
an active material layer on the current collector.

10. A secondary battery comprising a cathode, an anode, a separator between the cathode and the anode, and an electrolyte,
wherein at least one of the cathode and the anode comprises the electrode for a secondary battery of claim 9.

11. A method of preparing a current collector for a secondary battery, comprising:
adding a metal compound, an inorganic acid, an organic acid, and a first conductive agent into a first solvent to prepare a coating composition; and
coating the coating composition on a surface of a conductive substrate to form a coating layer,
wherein the conductive substrate is a non-degreased substrate containing a first metal, and the second metal of the metal compound is different from the first metal.

12. The method of preparing a current collector for a secondary battery of claim 11, wherein the metal compound comprises at least one selected from the group consisting of:
chromium potassium alum (KCr(SO₄)₂·12H₂O), chromium chloride (CrCl₃), chromium fluoride (CrFs), chromium hydroxide (Cr(OH)₃), chromium nitrate (Cr(NO₃)₃), chromium phosphate (CrPO₄), iron chromate (FeCr₂O₄) and hydrates thereof;
cobalt chloride (CoCl₂), cobalt acetate (Co(CH₃COO)₂·4H₂O), cobalt sulfate (CoSO₄), zinc sulfate (ZnSO₄), manganese sulfate (MnSO₄), nickel sulfate (NiSO₄) and hydrates thereof;
zirconium phosphate (Zr(HPO₄)₂), zirconium sulfate (Zr(SO₄)₂), zirconium nitrate (ZrO(NO₃)₂), zirconium hydroxide (Zr(OH)₄);
zirconium fluoride (H₂ZrF₆) and its soluble salts (Na₂ZrF₆, K₂ZrF₆, Zr(NH₄)₂F₆); and
titanium dioxide (TiO₂).

13. The method of preparing a current collector for a secondary battery of claim 11, wherein the inorganic acid comprises at least one selected from the group consisting of nitric acid (HNO₃), sulfuric acid (H₂SO₄), phosphoric acid (H₃PO₄), boric acid (H₃BO₃), carbonic acid (H₂CO₃) and hydrogen halides.

14. The method of preparing a current collector for a secondary battery of claim 11, wherein the organic acid comprises at least one selected from the group consisting of formic acid, acrylic acid, citric acid, lactic acid, oxalic acid, malonic acid, malic acid, succinic acid, benzoic acid, salicylic acid, acetic acid, propionic acid, butanoic acid, palmitic acid and oleic acid.

15. The method of preparing a current collector for a secondary battery of claim 11, wherein the first conductive agent comprises at least one selected from the group consisting of natural graphite, artificial graphite, carbon black, acetylene black, Ketjen black, channel black, furnace black, lamp black, summer black, graphene and carbon fiber.

16. The method of preparing a current collector for a secondary battery of claim 11, wherein the coating composition is coated on the conductive substrate by using spin coating, bar coating, gravure coating, roll coating, blade coating, slide die coating, or dipping coating.

17. The method of preparing a current collector for a secondary battery of claim 11, further comprising drying the coating layer,
wherein drying the coating layer is performed at a temperature of 80°C to 300°C.

18. The method of preparing a current collector for a secondary battery of claim 11, wherein the coating layer has a thickness of 10 nm to 5 *µ*m.

19. The method of preparing a current collector for a secondary battery of claim 11, wherein the metal compound is added in an amount of 0.5 to 10 parts by weight based on 100 parts by weight of the coating composition;
the inorganic acid is added in an amount of 0.05 to 10 parts by weight based on 100 parts by weight of the coating composition;
the organic acid is added in an amount of 1 to 20 parts by weight based on 100 parts by weight of the coating composition; and
the second conductive material is added in an amount of 0.01 to 5 parts by weight based on 100 parts by weight of the coating composition.
